**Europäisches Patentamt**

**European Patent Office**

**Office européen des brevets**

(19)

(11) **EP 1 431 720 A1**

(12) **EUROPÄISCHE PATENTANMELDUNG**

(43) Veröffentlichungstag:
   **23.06.2004 Patentblatt 2004/26**

(51) Int Cl.⁷: **G01F 1/84**

(21) Anmeldenummer: **02028559.9**

(22) Anmeldetag: **20.12.2002**

(84) Benannte Vertragsstaaten:
   **AT BE BG CH CY CZ DE DK EE ES FI FR GB GR IE IT LI LU MC NL PT SE SI SK TR**
   Benannte Erstreckungsstaaten:
   **AL LT LV MK RO**

(71) Anmelder: **ABB Research Ltd.**
   **8050 Zürich (CH)**

(72) Erfinder:
   • **Kassubek, Frank, Dr.**
    **5404 Dättwill (CH)**

   • **Gebhardt, Jörg, Dr.**
    **55130 Mainz (DE)**
   • **Waldi, Wolfgang**
    **69226 Nussloch (DE)**

(74) Vertreter: **Fritsch, Klaus et al**
   **c/o ABB Patent GmbH,**
   **Postfach 1140**
   **68520 Ladenburg (DE)**

(54) **Auslegermasse zur Montage an Wellen oder Rohren**

(57)    Die Erfindung betrifft eine Auslegermasse (100) zur Montage an Wellen oder Rohren zum Zwecke der Beeinflussung von schwingungstechnischen Eigenschaften dieser Wellen oder Rohre, wobei die Auslegermasse ein geometrischer Körper mit wenigstens einer kreisförmigen Ausnehmung (20) ist, mittels welcher kreisförmigen Ausnehmung (20) der Körper auf die Welle oder das Rohr aufschiebbar und dort fixierbar ist, Die Auslegermasse (100) ist aus wenigstens einem ersten und wenigstens einem zweiten Teil-Körper (10, 30) zusammengesetzt. Der wenigstens erste Teilkörper (10) weist die wenigstens eine kreisförmige Ausnehmung (20) auf, und der wenigstens zweite Teilkörper (30) ist außerhalb des Bereiches der kreisförmigen Ausnehmung (20) an dem wenigstens ersten Teilkörper (10) befestigt. Die geometrischen Abmessungen des wenigstens ersten und zweiten Teilkörpers (10, 30), die Lage der wenigstens einen kreisförmigen Ausnehmung (20) sowie der Befestigungsort des wenigstens zweiten Teilkörpers (30) auf dem ersten Teilkörper (10) sind aus für die Auslegermasse (100) vorgegebenen mechanischen Parametern mittels mechanischer Berechnungsverfahren ermittelbar.

Fig. 1

**EP 1 431 720 A1**

**Beschreibung**

Die Erfindung betrifft eine Auslegermasse zur Montage an Wellen oder Rohren sowie deren Verwendung in einem Massendurchfluss/Dichteaufnehmer mit einem geraden Messrohr.

In technischen Anwendungen von Wellen oder Rohren ist es oft erforderlich, die schwingungstechnischen Eigenschaften der Welle oder des Rohres zu beeinflussen, so dass ein gewünschter technischer Effekt erzielt wird. Es sind beispielsweise Massendurchfluss/Dichteaufnehmer bekannt, die nach dem Vibrationsprinzip arbeiten, sogenannte Coriolis-Massendurchflussaufnehmer. Diese weisen ein von einem zu messenden Fluid durchströmtes Messrohr auf, das von einer Erregeranordnung zu einer periodischen Bewegung angeregt wird, und bei denen an mindestens zwei Stellen die Kraftwirkung des Fluides auf die Rohrwand erfasst wird. Aus der Phasendifferenz der Messsignale kann der Massendurchfluss ermittelt werden.

Wichtig ist dabei, dass ein Auskoppeln von Vibrationen aus dem Gerät vermieden wird, insbesondere ein Auskoppeln in die Rohrleitung, in die das Gerät eingebaut ist. In der EP 0 849 568 ist ein Coriolis-Massendurchfluss-Aufnehmer beschrieben, der eine Auslegermasse in Form einer Scheibe mit einer Bohrung aufweist, mittels welcher Bohrung die Scheibe über das Messrohr geschoben und an dem Messrohr fixiert ist. Die Auslegermasse erzeugt eine Unwucht, die mittels einer Gegenmasse, die durch einen am Messrohr fixierten Träger realisiert ist, kompensiert wird, so dass das Gerät nach aussen hin keine Vibrationen überträgt.

Es ist auch vorgeschlagen worden, an dem Messrohr wenigstens zwei Auslegermassen zu fixieren, so dass die Schwerpunkte der Auslegermassen in einer gemeinsamen, senkrecht zur Schwingungsebene durch die Längsachse des Messrohres verlaufenden Ebene, nicht jedoch auf der Längsachse des Messrohres liegen. Hinsichtlich ihrer Masse, der Lage ihres Schwerpunktes und ihres inneren Trägheitsmomentes sind die vorgeschlagenen Auslegermassen so ausgebildet und auf dem Messrohr angeordnet, dass der gemeinsame Schwerpunkt des Systems, welches aus dem Messrohr und den Auslegermassen gebildet ist, in Ruhe bleibt. Die dazu erforderlichen konkreten Werte für die Masse, die Lage des Schwerpunktes und des Trägheitsmomentes werden durch Anwendung von im Prinzip bekannten mechanischen Berechnungsmethoden ermittelt.

Allerdings ist es recht aufwendig, eine Auslegermasse so zu bauen und auf dem Messrohr zu fixieren, dass die rechnerisch ermittelten mechanischen Parameter eingehalten werden. Dies geschieht häufig in einem iterativen Prozess, bei dem eine einmal gewählte konkrete Auslegermasse aufgrund experimenteller Ergebnisse so lange geändert wird, bis sie die errechneten Parameter aufweist.

Es ist daher die Aufgabe der vorliegenden Erfindung, für eine durch rechnerisch ermittelte mechanische Parameter bestimmte Auslegermasse zur Montage an Wellen oder Rohren wenigstens eine konkrete Realisierungsform aufzuzeigen, die einfach und kostengünstig herstellbar ist und deren Auslegung weitgehend automatisch erfolgen kann.

Die Aufgabe wird gelöst durch die kennzeichnenden Merkmale des Anspruchs 1.

Erfindungsgemäß also ist die Auslegermasse aus wenigstens einem ersten und wenigstens einem zweiten Teil-Körper zusammengesetzt. Der erste Teilkörper weist wenigstens eine Bohrung auf, und der zweite Teilkörper ist außerhalb des Bereiches der Bohrung an dem ersten Teilkörper befestigt. Die geometrischen Abmessungen des ersten und zweiten Teilkörpers, die Lage der wenigstens einen Bohrung sowie der Befestigungsort des wenigstens zweiten Teilkörpers auf dem ersten Teilkörper sind aus für die Auslegermasse vorgegebenen mechanischen Parametern mittels mechanischer Berechnungsverfahren ermittelbar. In einer besonders vorteilhaften Ausgestaltung der Erfindung sind die Teilkörper dabei einfache, quader- oder zylinderförmige geometrische Körper, in besonders vorteilhafter Weise handelt es sich bei dem wenigstens ersten Teilkörper um eine quaderförmige Platte und bei dem wenigstens zweiten Teilkörper um einen kreiszylindrischen Körper.

Der Vorteil einer solchen erfindungsgemäßen Auslegermasse besteht darin, dass die Teilkörper aus kostengünstig verfügbaren Halbzeugen einfach gefertigt werden können. Es können beispielsweise Bleche mit gängigen Standarddicken verwendet werden, aus denen die Teilkörper dann mit den jeweils aus den mechanischen Berechnungsverfahren ermittelten geometrischen Abmessungen beispielsweise ausgestanzt oder ausgesägt werden. Die Teilkörper können aufeinander mittels bekannter Verbindungsmethoden befestigt sein, beispielsweise durch Kleben, Löten, Schweißen.

Der Erfindung insgesamt liegt die Erkenntnis zugrunde, dass es möglich ist, die mechanischen Körper-Parameter eines geometrischen Körpers mit Hilfe eines mechanischen Modells so auf die mechanischen Teilkörper-Parameter der einfachen Teilkörper abzubilden, dass beim späteren Zusammensetzen der einfachen Teilkörper zu dem geometrischen Körper dieser genau die durch seine Körper-Parameter bestimmten mechanischen Eigenschaften aufweist, und dass es die Auslegung und Herstellung von geometrischen Körpern erheblich erleichtert, wenn diese aus einfach zu berechnenden und zu fertigenden Teilkörpern zusammengesetzt sind, anstatt sie als Ganzes zu berechnen und zu fertigen.

In einer vorteilhaften Ausgestaltung der Erfindung ist die Lage der das Messrohr aufnehmenden Bohrung durch den Abstand des Schwerpunktes des ersten Teilkörpers von der Längsachse und/oder einer Schwerelinie des Rohres bestimmbar. Der Befestigungsort des zweiten Teilkörpers auf dem ersten Teilkörper ist durch den Abstand des Schwerpunktes des zweiten Teilkörpers von der Längsachse und/oder einer Schwerelinie des Rohres bestimmbar.

Insbesondere vorteilhaft ist eine Ausführungsform der Erfindung, bei der die Lage der wenigstens einen Bohrung sowie der Befestigungsort des zweiten Teilkörpers auf dem ersten Teilkörper aus der Gesamtmasse der Auslegermasse $m_a$, dem Abstand des Schwerpunktes der Auslegermasse von der Längsachse und/oder einer Schwerelinie der Welle oder des Rohres $l_a$, und dem Trägheitsmoment der Auslegermasse bezogen auf die Längsachse und/oder eine Schwerelinie der Welle oder des Rohres $\theta_a$, mittels mechanischer Berechnungsverfahren bestimmbar sind. $m_a$, $l_a$ und $\theta_a$ sind dabei aus modellbasierten mechanischen Berechnungen für das Gesamtsystem resultierend.

Weitere vorteilhafte Ausgestaltungen und Verbesserungen der Erfindung sind den Unteransprüchen zu entnehmen.

Anhand der Zeichnungen, in denen zwei Ausführungsbeispiele der Erfindung dargestellt sind, sollen die Erfindung sowie weitere vorteilhafte Ausgestaltungen und Verbesserungen der Erfindung und weitere Vorteile näher erläutert und beschrieben werden.

Es zeigen:

Fig. 1   eine erfindungsgemäße Auslegermasse und

Fig. 2   einen Coriolis Massendurchflussaufnehmer mit vier erfindungsgemäßen Auslegermassen

Eine Auslegermasse 100 besteht aus einer quaderförmigen Platte 10 und einem die Platte durchdringenden kreiszylindrischen Körper 30. Die Platte10 weist als erste Bezugsfläche 11 ein Rechteck mit einer ersten, längeren Seite 12 der Länge $l_z$ und einer zweiten, kürzeren Seite 13 der Länge $l_x$ auf. Zwei Seitenflächen 18, 19 der Platte 10 werden von Längskanten 14, 15 bzw. 16, 17 der Länge $l_y$ begrenzt. Eine erste Breitseite 10a der Platte 10 wird durch die Längskanten 14, 16 begrenzt. In einem Abstand h von der Bezugsfläche 11 ist in der Platte 10 eine kreisförmige, durchgängige Ausnehmung mit dem Radius $r_d$ eingebracht. Die Ausnehmung 20 entspricht in ihrem Radius $r_d$ dem Außendurchmesser des Rohres oder der Welle, auf der die Auslegermasse 100 angebracht werden soll. Deren Mittelachse 22 liegt in der Mitte zwischen den beiden Seitenflächen 18, 19, der Mittelpunkt 21 der kreisförmigen Ausnehmung 20 liegt auf der Mittelachse 22. Der Schwerpunkt 22 der Platte 10 mit darin eingebrachter Ausnehmung 20 befindet sich in einem Abstand $s$ von der Mittelachse 22.

Der kreiszylindrische Körper 30 hat eine kreisförmige Stirnfläche 32 mit dem Radius $r_a$, seine Länge gemessen in der Längsrichtung des Körpers 30 ist mit L bezeichnet. Der kreiszylindrische Körper 30 durchdringt die Platte 10 in einem Abstand $vs$ von der Mittelachse 22 der kreisförmigen Ausnehmung 20 in der Platte 10 so, dass er symmetrisch bezüglich einer Ebene, die parallel zur ersten Breitseite 10a der Platte und durch den Schwerpunkt 22 der Platte verläuft, angeordnet ist. Dadurch steht auf der Seite der ersten Breitseite 10a der Platte 10ein Teilstück 30a des kreiszylindrischen Körpers 30 heraus, dessen Länge in Längsrichtung des Körpers 30, von der kreisförmigen Stirnfläche 32 bis zur ersten Breitseite 10a gemessen, mit $d$ bezeichnet sei. Der Abstand $vs$ bezieht sich auf den Abstand der Mittelachse 33 des kreiszylindrischen Körpers 30 von der Mittelachse 22 der kreisförmigen Ausnehmung 20. Der kreiszylindrische Körper 30 ist an der Platte 10 durch bekannte Verbindungstechniken fixiert, beispielsweise durch Löten, Schweißen oder Kleben.

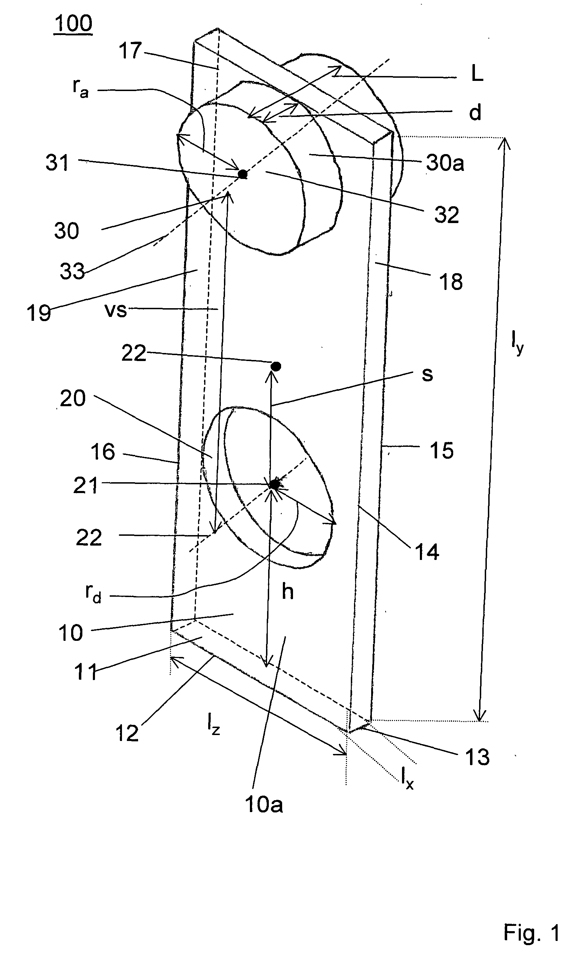

Der besondere Vorteil einer erfindungsgemäßen Auslegermasse gemäß Fig. 1 wird insbesondere deutlich bei Betrachtung der Vorgehensweise bei der Auslegung derselben. Als vorgegeben seien dazu drei Parameter der gesamten Auslegermasse anzusehen, die aus modellbasierten mechanischen Berechnungen für das Gesamtsystem resultieren. Es sind dies: die Masse $m_a$, der Abstand des Schwerpunkts von dem Rohr bzw. der Welle $l_a$ und das Trägheitsmoment $\theta_a$ bezogen auf die Rohr- bzw. Wellenachse. Das weitere Vorgehen zur Auslegung der Geometriegrößen von Platte 10 und Körper 30 sind wie folgt:

1. Zunächst wird der Wellen- bzw. Rohraußenradius $r_d$ fixiert. Er ist ohnehin normalerweise durch die Applikation vorgegeben.

2. Es zeigt sich nun, dass $l_x, l_y, l_z, d$ vorgegeben werden können, und man daraufhin in einer rechnerisch einfachen Situation ist. Insbesondere können die vier Werte als Standardmaße vorgegeben werden, so dass die Materialbeschaffung sehr kostengünstig möglich ist. Die Platte 10 und der zylindrische Körper 30 können z.B. aus Blechen von, in mm gemessen, ganzzahliger Dicke geschnitten werden.

Sind diese Parameter vorgegeben, muss man noch $r_a$, $s$ und $vs$ bestimmen, um den Radius des Kreiszylinders 30 und die relative Lage von Platte 10, Ausnehmung 20 und Kreiszylinder 30 festzulegen.

3. Dann benutzt man die Massengleichung, um als nächstes $r_a$ auszurechnen. Die Gleichung lautet

$$ma - \rho \, lx \, ly \, lz - 2 \rho \, d \, \pi \, ra^2 + \rho \, \pi \, lx \, rd^2 = 0,$$

ist also eine quadratische Gleichung für $r_a$.

Man findet sofort den entsprechenden Zahlenwert.

4. Diesen Zahlenwert benutzt man in der Schwerpunktsgleichung

$$la - \frac{\rho\ lx\ ly\ lz\ s + 2\ \rho\ d\ \pi\ ra^2\ vs}{\rho\ lx\ ly\ lz + 2\ \rho\ d\ \pi\ ra^2 - \rho\ \pi\ lx\ rd^2} = 0,$$

und erhält *vs* als lineare Funktion von *s*. (Wie man an der Formel feststellt, ist durch die bislang fixierten Parameter die lineare Beziehung eindeutig definiert.)

5. Man kann daher *vs* in der Trägheitsmomentengleichung

$$\Theta\ \_a - \rho\ lx\ ly\ lz\ s^2 - 2\ \rho\ d\ \pi\ ra^2\ vs^2 - \rho\ d\ \pi\ ra^4 - \frac{1}{12}\ \rho\ lx\ ly\ lz\ (ly^2 + lz^2) + \frac{1}{2}\rho\ \pi\ lx\ rd^4 = 0$$

eliminieren und erhält eine quadratische Gleichung in *s*. Es zeigt sich, dass diese für typische Parameterwerte zwar eine sehr kleine Diskriminante haben kann, es lassen sich jedoch durch geeignete Parametervariation reelle und positive Lösungen für *s* finden.

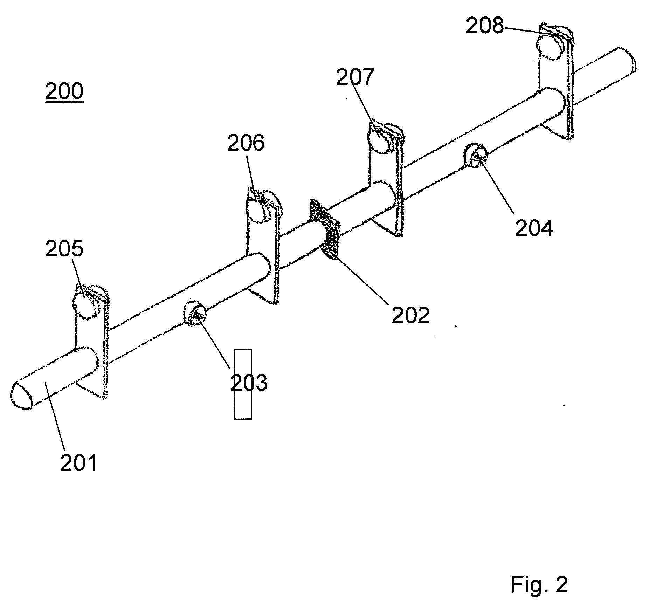

In der Fig. 2 ist ein Coriolis Massendurchfluss-Messaufnehmer 200 mit einem einzigen, geraden Messrohr 201 dargestellt, an dem vier erfindungsgemäße Auslegermassen 205, 206, 207, 208 so fixiert sind, dass die Schwerpunkte der Auslegermassen in einer gemeinsamen, senkrecht zur Schwingungsebene des Messrohres 201 und durch die Längsachse des Messrohres 201 verlaufenden Ebene, nicht jedoch auf der Längsachse des Messrohres liegen. Hinsichtlich ihrer Masse $m_a$, der Lage ihres Schwerpunktes $l_a$ und ihres inneren Trägheitsmomentes $\theta_a$ sind die vorgeschlagenen Auslegermassen so ausgebildet und auf dem Messrohr angeordnet, dass der gemeinsame Schwerpunkt des Systems, welches aus dem Messrohr und den Auslegermassen gebildet ist, in Ruhe bleibt. Die dazu erforderlichen konkreten Werte für die Masse $m_a$, die Lage des Schwerpunktes $l_a$ und des Trägheitsmomentes $\theta_a$ wurden durch Anwendung von im Prinzip bekannten mechanischen Berechnungsmethoden ermittelt. Der Coriolis Massendurchfluss-Messaufnehmer 200 weist insgesamt eine sehr geringe Auskopplung von Vibrationen aus dem Messgerät und somit eine sehr hohe Empfindlichkeit auf. Der Coriolis Massendurchfluss-Messaufnehmer 200 weist ferner zwei Schwingungsaufnehmer 203, 204 auf, sowie eine Erregeranordnung 202, mittels derer das Messrohr 201 in gekoppelte Biege/Torsionsschwingungen versetzt wird.

**Patentansprüche**

1. Auslegermasse (100) zur Montage an Wellen oder Rohren zum Zwecke der Beeinflussung von schwingungstechnischen Eigenschaften dieser Wellen oder Rohre, wobei die Auslegermasse ein geometrischer Körper mit wenigstens einer kreisförmigen Ausnehmung (20) ist, mittels welcher kreisförmigen Ausnehmung (20) der Körper auf die Welle oder das Rohr aufschiebbar und dort fixierbar ist, **dadurch gekennzeichnet, dass**

   - die Auslegermasse (100) aus wenigstens einem ersten und wenigstens einem zweiten Teil-Körper (10, 30) zusammengesetzt ist,
   - der wenigstens erste Teilkörper (10) die wenigstens eine kreisförmige Ausnehmung (20) aufweist und der wenigstens zweite Teilkörper (30) außerhalb des Bereiches der kreisförmigen Ausnehmung (20) an dem wenigstens ersten Teilkörper (10) befestigt ist, und
   - die geometrischen Abmessungen des wenigstens ersten und zweiten Teilkörpers (10, 30), die Lage der wenigstens einen kreisförmigen Ausnehmung (20) sowie der Befestigungsort des wenigstens zweiten Teilkörpers (30) auf dem ersten Teilkörper (10) aus für die Auslegermasse (100) vorgegebenen mechanischen Parametern mittels mechanischer Berechnungsverfahren ermittelbar sind.

2. Auslegermasse (100) nach Anspruch 1, **dadurch gekennzeichnet, dass** die Teilkörper einfache, quader- oder zylinderförmige geometrische Körper sind.

3. Auslegermasse (100) nach Anspruch 2, **dadurch gekennzeichnet, dass** die Lage der kreisförmigen Ausnehmung (20) durch den Abstand des Schwerpunktes des ersten Teilkörpers (10) von der Längsachse und/oder einer Schwerelinie der Welle oder des Rohres bestimmbar ist.

**4.** Auslegermasse (100) nach Anspruch 2, **dadurch gekennzeichnet, dass** der Befestigungsort des zweiten Teilkörpers (30) auf dem ersten Teilkörper (10) durch den Abstand des Schwerpunktes des zweiten Teilkörpers von der Längsachse und/oder einer Schwerelinie der Welle oder des Rohres bestimmbar ist.

**5.** Auslegermasse (100) nach einem der vorhergehenden Ansprüche, **dadurch gekennzeichnet, dass** die Lage der wenigstens einen kreisförmigen Ausnehmung (20) sowie der Befestigungsort des zweiten Teilkörpers (30) auf dem ersten Teilkörper (10) aus der Gesamtmasse der Auslegermasse, dem Abstand des Schwerpunktes der Auslegermasse von der Längsachse und/oder einer Schwerelinie der Welle oder des Rohres, und dem Trägheitsmoment der Auslegermasse bezogen auf die Längsachse und/oder eine Schwerelinie der Welle oder des Rohres, mittels mechanischer Berechnungsverfahren bestimmbar sind.

**6.** Auslegermasse (100) nach einem der vorhergehenden Ansprüche, **dadurch gekennzeichnet, dass** der erste Teilkörper (10) eine quaderförmige Platte und der zweite Teilkörper (30) ein kreiszylindrischer Körper ist.

**7.** Coriolis Massendurchfluss/Dichteaufnehmer (200) mit einem einzigen geraden Messrohr (201), **dadurch gekennzeichnet, dass** an dem Messrohr wenigstens zwei Auslegermassen gemäß einem der Ansprüche 1 bis 6 fixiert sind.

Fig. 1

200

208

207

206

205

204

202

203

201

Fig. 2

**Europäisches Patentamt**

# EUROPÄISCHER RECHERCHENBERICHT

Nummer der Anmeldung

EP 02 02 8559

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | EP 0 866 317 A (FLOWTEC AG) 23. September 1998 (1998-09-23) * Spalte 4, Zeilen 26-39; Spalte 5, Zeilen 27-31; Abbildungen * * Spalte 4, Zeile 26; Abbildungen * --- | 1-7 | G01F1/84 |
| D,A | EP 0 849 568 A (FLOWTEC AG) 24. Juni 1998 (1998-06-24) * Spalte 8, Zeile 24 – Zeile 49; Abbildungen 1-5 * ----- | 1-7 | |

RECHERCHIERTE SACHGEBIETE (Int.Cl.7)

G01F

Der vorliegende Recherchenbericht wurde für alle Patentansprüche erstellt

| Recherchenort | Abschlußdatum der Recherche | Prüfer |
|---|---|---|
| DEN HAAG | 26. Mai 2003 | Rose, A |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie,übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 02 02 8559

In diesem Anhang sind die Mitglieder der Patentfamilien der im obengenannten europäischen Recherchenbericht angeführten Patentdokumente angegeben.
*Die Angaben über die Familienmitglieder entsprechen dem Stand der Datei des Europäischen Patentamts am*
Diese Angaben dienen nur zur Unterrichtung und erfolgen ohne Gewähr.

26-05-2003

| Im Recherchenbericht angeführtes Patentdokument | | Datum der Veröffentlichung | Mitglied(er) der Patentfamilie | | Datum der Veröffentlichung |
|---|---|---|---|---|---|
| EP 0866317 | A | 23-09-1998 | EP | 0866317 A1 | 23-09-1998 |
| | | | CN | 1201903 A | 16-12-1998 |
| | | | DE | 59800425 D1 | 15-02-2001 |
| | | | DK | 866317 T3 | 23-04-2001 |
| | | | ES | 2154930 T3 | 16-04-2001 |
| | | | JP | 2839885 B2 | 16-12-1998 |
| | | | JP | 10267723 A | 09-10-1998 |
| | | | US | 6047457 A | 11-04-2000 |
| EP 0849568 | A | 24-06-1998 | EP | 0849568 A1 | 24-06-1998 |
| | | | CN | 1193733 A | 23-09-1998 |
| | | | DK | 849568 T3 | 15-11-1999 |
| | | | JP | 2872205 B2 | 17-03-1999 |
| | | | JP | 10185646 A | 14-07-1998 |
| | | | US | 2002117010 A1 | 29-08-2002 |
| | | | US | 6401548 B1 | 11-06-2002 |
| | | | US | 6006609 A | 28-12-1999 |
| | | | DE | 59700185 D1 | 08-07-1999 |
| | | | ES | 2135285 T3 | 16-10-1999 |

EPO FORM P0461

Für nähere Einzelheiten zu diesem Anhang : siehe Amtsblatt des Europäischen Patentamts, Nr. 12/82